(19) Europäisches Patentamt
European Patent Office
Office européen des brevets

(11) **EP 2 127 268 B1**

(12) **EUROPEAN PATENT SPECIFICATION**

(45) Date of publication and mention
of the grant of the patent:
**31.08.2011 Bulletin 2011/35**

(51) Int Cl.:
*H04L 12/56* (2006.01)     *H04M 7/00* (2006.01)
*H04L 12/26* (2006.01)

(21) Application number: **08709315.9**

(22) Date of filing: **07.02.2008**

(86) International application number:
**PCT/FI2008/050047**

(87) International publication number:
**WO 2008/096042 (14.08.2008 Gazette 2008/33)**

(54) **TRANSMISSION OF REAL-TIME USER DATA FRAMES IN PACKETS**

ÜBERTRAGUNG VON ECHTZEIT-BENUTZERDATENRAHMEN IN PAKETEN

TRANSMISSION DE TRAMES DE DONNÉES UTILISATEUR EN TEMPS RÉEL PAR PAQUETS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.02.2007 FI 20075094**

(43) Date of publication of application:
**02.12.2009 Bulletin 2009/49**

(73) Proprietor: **TeliaSonera AB**
**10663 Stockholm (SE)**

(72) Inventors:
• **HUOVIALA, Rauno**
**FI-00530 Helsinki (FI)**
• **PIHLAJAMÄKI, Antti**
**FI-00580 Helsinki (FI)**

(74) Representative: **Honkasalo, Terhi Marjut Anneli**
**Kolster OY AB**
**P.O. Box 148 (Iso Roobertinkatu 23)**
**Helsinki 00121 (FI)**

(56) References cited:
**EP-A- 1 178 635        EP-A1- 1 178 635**
**EP-A2- 0 942 560       JP-A- 07 079 250**
**US-A1- 2005 094 628    US-A1- 2005 122 960**
**US-A1- 2005 122 960    US-B1- 6 886 040**

**Description**

FIELD OF THE INVENTION

The invention relates to the transmission of real-time user data frames in packets, and more particularly to real-time user data frame packetization into packets.

BACKGROUND OF THE INVENTION

An example of the transmission of real-time user data frames in packets is the Voice over Internet Protocol, VoIP. VoIP means routing of voice conversations over the Internet or through any other IP-based network between two or more terminals. VoIP is also called IP Telephony, Internet telephony, IP voice transmission, packet-voice, packetized voice, broadband telephony, broadband phone and voice over broadband. To transmit VoIP, analog voice is sampled at certain intervals, each sample is encoded into a frame, i.e. a small number of bits, the frames may be compressed, and these frames are then packetized into IP packets which can be transmitted over an IP network. Since IP packets may be variable in length, a network operator or a service provider providing the VoIP service may decide on how many frames are packetized into one IP packet. Basically, the fewer frames there are in one IP packet, the smaller is the handling delay of the voice, the better is the quality of the voice at a receiving end, but the network resource usage is less efficient. Thus, the network operator or the service provider tries to optimize the quality of voice and efficient use of network resources when deciding on the number of frames to be packetized into one IP packet on the basis of the calculable, constant handling delay. However, there are also variable, transmission-specific factors that affect to the quality of voice, such as the load of the network nodes, data transfer rate and access network technology. A problem is that no mechanism exists for considering these other factors when on the number of frames to be packetized into one IP packet is decided.

US 6886040 discloses a solution in which packet payloads are dynamically adjusted by using end-to-end delay received in an RTCP report message that is periodically sent to a transmitting node.

US 2005/122960 discloses a solution in which test packets of different lengths are sent and their source-to-destination delays are determined to determine an optimal packet length for the preferred ear-to-mouth delay. The optimal packet length is used to determine how many frames are packetized into one packet. To adjust the optimal packet length a new set of test packets is sent.

SUMMARY

An object of the present invention is to provide a method and an apparatus for implementing the method so as to provide a mechanism taking into account variable factors affecting the quality of real-time user data transmission. The object of the invention is achieved by a method, a computer program product, apparatuses, and a system which are characterized by what is stated in the independent claims. The preferred embodiments of the invention are disclosed in the dependent claims.

The invention is based on the idea of utilizing prevailing latency information, i.e. delay information exchanged between apparatuses with which information a transmission delay containing cumulative delays that occurred during a transmission between two apparatuses can be determined, when concluding how many real-time user data frames are to be packetized into one packet.

An advantage of the invention is that it enables optimising the quality of transmitted real-time user data, for example voice, and efficient use of network resources so that also transmission-specific factors affecting the total latency, and thereby to the quality, can be taken into account.

BRIEF DESCRIPTION OF THE DRAWINGS

In the following the invention will be described in greater detail by means of preferred embodiments with reference to the attached drawings, in which

Figure 1 shows the general architecture of a communication system;
Figure 2 is a simplified block diagram of an apparatus according to an embodiment;
Figure 3 is a flow chart illustrating the functionality of an apparatus according to an embodiment; and
Figures 4 to 6 illustrate signalling according to embodiments.

DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment (s), or that the feature only applies to a single embodiment.

The present invention is applicable to any user terminal, a network node, a corresponding component, and/or to any communication system or any combination of different communication systems that provide real-time user data frame transmission in packets, such as VoIP, push to talk over cellular (PoC) and video streaming. The communication system may be a fixed communication system or a wireless communication system or a communication system utilizing both fixed networks and wireless networks. The protocols used, the specifications of communication systems, network nodes and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using, as an example of a real-time user data frame transmission in packets whereto the embodiments may be applied, VoIP without restricting the embodiment to such an architecture, however.

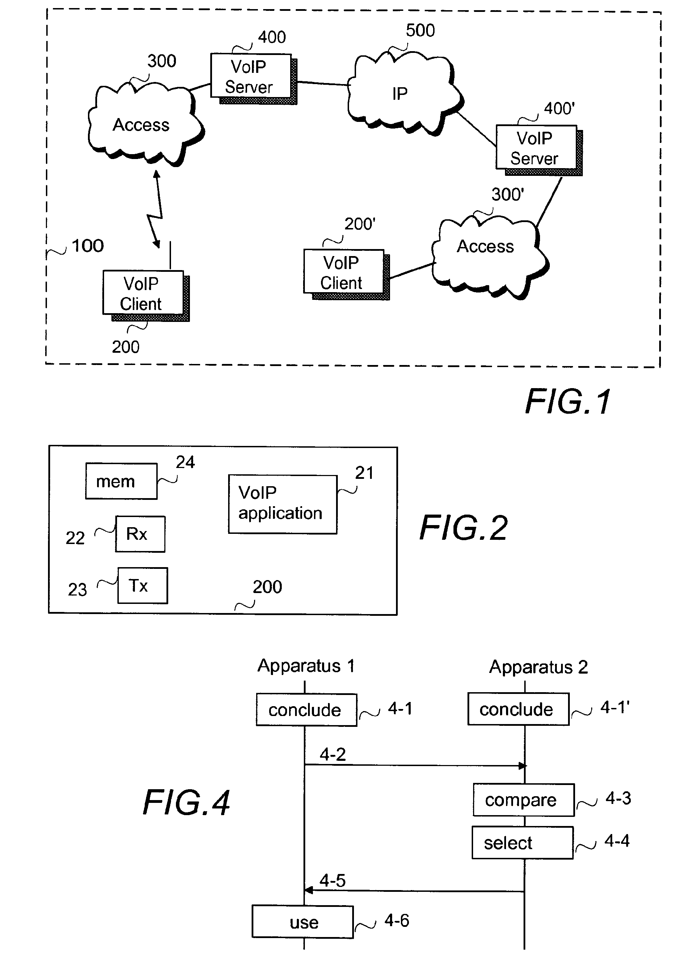

A general architecture of a communication system providing VoIP is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for group communication, are irrelevant to the actual invention. Therefore, they need not to be discussed in more detail here.

The communication system 100 providing VoIP comprises user terminals 200, 200' with VoIP clients, one or more access networks 300, 300', one or more network nodes 400, 400' comprising a VoIP server component, and an Internet protocol (IP) based network 500. A VoIP client in a user terminal gains access to a VoIP server component via an access network, and the VoIP server component transmits the voice in packets over an Internet protocol based network.

The user terminal 200, 200' comprising a VoIP client is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting information to the network, connectable to the network wirelessly or via a fixed connection and comprising a VoIP client. Examples of the user terminal include a personal computer, a game console, a laptop (a notebook), a personal digital assistant, a mobile station (mobile phone), and a line telephone. Although the user terminal is depicted herein as one entity, it is obvious that it may comprise several separate entities, such as an actual terminal, VoIP client module and a modem, for example.

The access network 300, 300' may be any network providing access. Examples of access network include local area networks, such as Wi-Fi and an Ethernet-based local area network, metropolitan area networks, such as WiMAX, a general packet radio service network, a network according to 2nd, 3rd or 4th or any further generation mobile communications system, and a public switched telephone network, or any other wide area network providing access to user terminals.

A network node 400, 400' comprising a VoIP server component, called below a VoIP server, may be a VoIP gateway or a gatekeeper or a proxy or a router.

An IP network 500 may be any fixed or wireless network employing an IP protocol, such as the Internet, intranet or a local area network. The access network may also be an IP network, and if participants of an end-to-end voice transmission use the same access network that is an IP network, it suffices that the system comprises the user terminals, one network and one network node comprising the VoIP server.

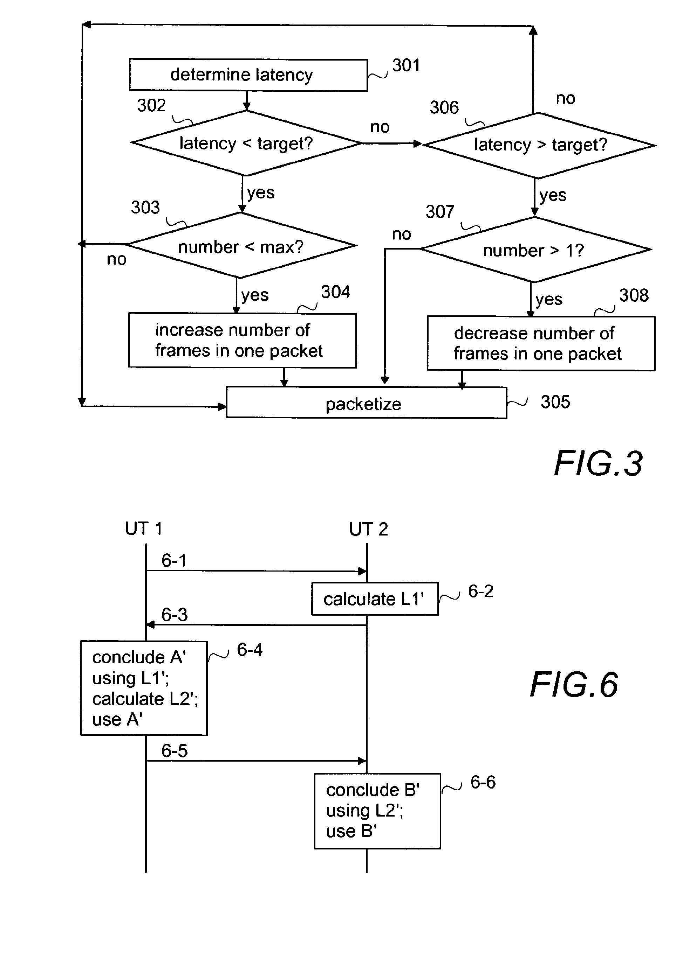

Figure 2 is a block diagram of an apparatus according to an embodiment. Although the apparatus has been depicted as one entity, different modules and memory may be implemented in one or more physical or logical entities. The apparatus 200 comprises an application module 21 for providing VoIP functionality, a receiver 22 for receiving packets, a transmitter 23 for sending packets and memory 24 for at least buffering the frames to be packetized, and for maintaining, at least temporarily, the number of frames to be packetized into one packet. The application module 21 may be a VoIP client or a VoIP server component, and thus the apparatus may be a user terminal or a network node. Different embodiments of such an apparatus, or more precisely, different examples of a functionality of the application module 21 are described in more detail below in Figures 3 to 6.

It should be appreciated that the apparatus may comprise other modules used in or for voice communication, or for some other communication. However, they are irrelevant to the actual invention and, therefore, they need not to be discussed in more detail here.

Apparatuses, such as network nodes, or corresponding network node components, user terminals and/or other corresponding devices or apparatuses implementing the functionality of a corresponding apparatus described in an embodiment comprise not only prior art means, but also means for concluding the number of frames to be packetized into one packet, the means being configured to use at least latency information on an end-to-end real-time data transmission between two apparatuses and/or means for receiving such a number. In addition, they may comprise means for determining a latency between two apparatuses for the real-time data transmission, for example. More precisely, they comprise means for implementing the functionality of a corresponding apparatus described in an embodiment and they may comprise separate means for each separate function, or means may be configured to perform two or more functions. Present apparatuses comprise processors and memory that can be utilized in an embodiment. For example, the application module 21 may be a software application, or a module configured as an arithmetic operation, or as a program (added or updated software routines), executed by an operation processor. Software routines, also called program products, including applets and macros, can be stored in any apparatus-readable data storage medium and they include program instructions to perform particular tasks. Thus, the apparatus, such as a network node comprising a VoIP server component, or a user terminal comprising a VoIP client, may be configured as a computer or a microprocessor, such as single-chip computer element, including at least a memory for providing storage area used for an arithmetic operation and an operation processor for executing the arithmetic operation. For example, an apparatus may comprise two processors: a host central processing unit (CPU) to run the operating system and protocols, and a dedicated digital signal processor (DSP) for the VoIP functionality. However, different processor cores, such as Adaptive Multi Rate (AMR) audio codec cores, enable the VoIP functionality to be subsumed into the host CPU. Further, software routines may be downloaded into an apparatus and the memory may be removable memory detachably connected to the apparatus.

Below different embodiments are disclosed. For the sake of clarity, an end-to-end transmission of VoIP between two or more terminals is called below an IP call.

In the embodiment illustrated in Figure 3, the apparatus has three parameters, the values of which are preset by a service provider or network operator, for example. The parameters are a target latency, a default value for a number of frames to be packetized into one packet, and a maximum number of frames in one packet. The target latency may be given as a range. The default value for the number of frames may depend on the access network used, in which case the apparatus is preferably configured to select the default value among a set of default values. The default value may also be updated. For example, the number last used in a session may be used as a default value in a subsequent session. In a process described below, the default value is used as a first value of the number of frames to be packetized into one packet currently in use. The target latency defines the quality of service level and the maximum number guarantees a certain transmission rate, thereby also affecting the quality of the service level. For example, if one frame is packetized into a packet, the transmission rate may be 28 kbit/s, whereas otherwise in a similar case, but, instead of one, four frames are packetized into one packet, the transmission rate decreases to 8,6 kbit/s.

In the embodiment of Figure 3, the apparatus determines, in step 301, a latency of an IP call. The latency may be determined by calculating the latencies from information transmitted in RTCP (RTP control protocol, RTP being a transport protocol for real-time applications and called a real-time transport protocol) messages, such as timestamps in a receiver report or a sender report, or corresponding messages providing control information on a media flow. The latency may also be determined on the basis of a packetization used by another participating apparatus, or on the basis of the access network, or the access networks of the participants. For example, the apparatus may contain or have access to information on access network types and their estimated latencies which the apparatus may use to determine a latency of an IP call. As further examples, when the apparatus is a server, it may receive information on the access network type from a user terminal, or deduce the access network type on the basis of an IP address of the user terminal. The latency is preferable an end-to-end latency between two apparatuses. Herein, a latency means transmission delay in one direction between two entities performing packetization/depacketization. Thus, the latency may mean a latency between a user terminal and a server, or vice versa, or a latency between two servers, or an end-to-end latency between user terminals for example when there is no server participating in the packetization/depacketization between the user terminals.

When the latency is determined, the apparatus compares, in step 302, the determined latency with the target latency. If the determined latency is smaller than the target latency (or smaller than a lower limit of a target latency range), the apparatus compares, in step 303, the number of frames to be packetized into one packet currently in use with the maximum number. If the number currently in use is smaller than the maximum number, the number is increased, in step 304, preferably by one, and the frames are packetized, in step 305, using the increased number.

If the number currently in use is not smaller than the maximum number (step 303), the maximum number is currently in use, and the frames are packetized, in step 305, using the maximum number.

If the determined latency is not smaller than the target latency (step 302) but larger (step 306) than the target latency (or an upper limit of the target latency range), the apparatus compares, in step 307, the number of frames to be packetized into one packet currently in use with one. If the number currently in use is bigger than one, the number currently in use is decreased, in step 308, preferably by one, and the frames are packetized, in step 305, using the decreased number.

If the number currently in use is one (step 307), decreasing it by one would end up to no frames being transmitted, and therefore the number currently in use will be maintained in the embodiment, and one frame is packetized, in step 305, into one packet.

If the determined latency is not smaller than the target latency (step 302) and not larger than the target latency (step 306), it is the target latency (or the determined latency is within the target latency range) and there is no need to amend the number, and the frames are packetized, in step 305, using the same number.

Depending on an implementation, the above process may be performed when an IP call is established, at certain intervals, or each time information on the latency is received.

In another embodiment, instead of determining the latency (step 301), another apparatus determines the latency and then sends the determined latency to the apparatus in which case the latency is received in step 301.

In another embodiment, the apparatus may be configured to detect a situation in which each time a latency is determined, the number is changed so that every other time the number is decreased and every other time the number is increased, and in response to such a situation to select the number with which the determined latency is nearer to the target latency (or the corresponding limit of the target latency range). This feature may be useful if the network involved has a narrow band and a big latency.

It should be appreciated that decreasing and/or increasing may be performed by another amount than one and that a minimum value for the number may be some other number instead of one used above. For example, in a further embodiment the amount by which the number is increased or decreased may depend on the difference between the determined latency and the target latency, or the corresponding limit of the target latency range.

In an embodiment illustrated in Figure 4, more than one apparatus involved in an IP call is able to adjust the number of frames to be packetized into one IP packet based on latency information, and the apparatuses are configured to negotiate the number so that eventually the apparatuses will use the same number. For the sake of clarity, only two apparatuses are illustrated. Both of the apparatuses may be VoIP servers or user terminals, or one of them may be a VoIP server and the other one a user terminal. In the example of Figure 4, it is assumed that an IP call establishment is triggered (not shown in Figure 4), and therefore the number of frames to be packetized into one packet needs to be concluded.

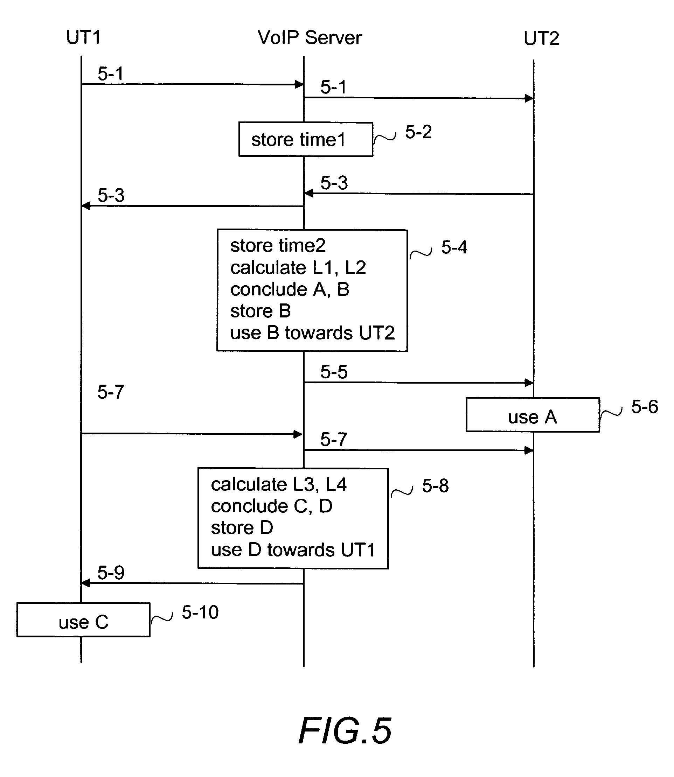

Referring to Figure 4, both apparatuses conclude, in points 4-1 and 4-1', using latency information, the number of frames to be packetized into one packet. For example, the conclusion may be performed as described above in Figure 3, or below in Figures 5 and 6. Possible information exchange needed to provide latency information for the conclusion is not shown in Figure 4. After the conclusion, apparatus 1 sends message 4-2 to apparatus 2, message 4-2 containing the number concluded by apparatus 1. In response to receiving message 4-2, apparatus 2 compares, in point 4-3, the number in message 4-2 with the number concluded by the apparatus 2. Then apparatus 2 selects, in point 4-4, the number to be used in the IP call. If the numbers are the same, the selection is easy: it is the number concluded by both apparatuses. If the numbers are not the same, apparatus 2 selects, in point 4-4, the smaller number. After the selection, apparatus 2 sends the selected number in message 4-5 to the apparatus 1, which then uses, in point 4-5, the selected number when apparatus 2 packetizes frames of the IP call into packets.

In another embodiment, when the numbers are not the same, apparatus 2 sends a message suggesting a number, for example an average, to apparatus 1, which then sends another suggestion to apparatus 2, or accepts the suggested number and informs apparatus 2 that the suggested number was accepted.

In another embodiment, both apparatuses send a message to the other apparatus, the message containing the number concluded by the sending apparatus. Then both apparatuses perform the comparison and selection described above in points 4-3 and 4-4 and use the selected smallest number.

In the following, different embodiments will be described using RTCP as an example of a control protocol for real-time user data transmission in packets, without restricting the embodiment to such a protocol, however. RTCP is described in IETF specification RFC3550, for example. A term "an RTCP report" covers here both an RTCP sender report and an RTCP receiver report.

In the embodiment illustrated in Figure 5, the VoIP server is configured to conclude and use the number, not only IP call-specifically, but also participant-specifically, and the user terminals are configured to receive a number to be used in packetization from the VoIP server, and in response to receiving such a number, to use it. This embodiment is particularly suitable when the latencies of the networks differ from each other. However, it should be noted that usually the latencies of similar kind of access networks are quite near each other, and then using the same number for each access network is adequate.

Referring to Figure 5, a user terminal UT1, having AN-A as its access network, sends a control message, message 5-1, which is an RTCP report, to a user terminal UT2, having AN-B as its access network, via a VoIP server. The VoIP server stores, in point 5-2, the time (time1), when it forwarded message 5-1. UT2 responses to message 5-1 by sending another control message 5-3 to UT1 via the VoIP server, message 5-3 being an RTCP report. The VoIP server stores, in point 5-4, the time (time2), when it forwarded message 5-3. Further, in response to receiving message 5-3 from UT2, the VoIP server calculates, in point 5-4, latencies between the VoIP server and UT2 for both directions.

For example, the latency L1 from the UT2 to the VoIP server and the latency L2 from the VoIP server to the UT2 can be calculated as follows, if message 5-3 is the most recent RTCP sender report from UT2:

$$L1 = time2' - (LSR - time1 + DLSR)$$

$$L2 = LSR - time1,$$

wherein
time2' is the reception time of message 5-3,
LSR is a last sender report timestamp (received in message 5-3), time1 is the time stored in point 5-2, and
DLSR is a delay since last sender report (received in message 5-3).

After determining the latencies, the VoIP server uses, in point 5-4, them to conclude the number of frames to be packetized into one packet between the VoIP server and UT2 for both directions. In the following, the number to be used from UT2 to the VoIP server (concluded using L1) is called A and the number to be used from the VoIP server to UT2 (concluded using L2) is called B. After concluding B, the VoIP server stores it and will use it when packetizing frames to be forwarded to UT2 (point 5-4). Then the VoIP server sends A to UT2 in message 5-5. UT2 will then packetize (point 5-6) A frames into one packet when packetizing the voice to be sent to UT1 via the VoIP server. Message 5-5 may be an acknowledgement message, a separate message for sending the number, or combined to message 5-7, for example.

When UT1 again sends a control message, message 5-7 (an RCTP report), to the UT2 via the VoIP server, the VoIP server is able to calculate latencies for that leg. Thus, in response to receiving message 5-7 from UT1 at time time3, the VoIP server calculates, in point 5-8, latencies between the VoIP server and UT1 for both directions. For example, the latency L3 from the UT1 to the VoIP server and the latency L4 from the VoIP server to the UT1 can be calculated as follows, if message 5-7 is the most recent RTCP sender report from UT1:

$$L3 = time3 - (LSR - time2 + DLSR)$$

$$L4 = LSR - time2$$

wherein
time3 is the reception time of message 5-7,
LSR is a last sender report timestamp (received in message 5-7),
time2 is the time stored in point 5-4, i.e. forwarding time of message 5-3, and
DLSR is a delay since last sender report (received in message 5-7).

After determining the latencies, the VoIP server uses, in point 5-8, them to conclude the numbers of frames to be packetized into one packet between the VoIP server and UT1 for both directions. In the following, the number to be used from UT1 to the VoIP server (concluded using L3) is called C and the number to be used from the VoIP server to UT1 (concluded using L4) is called D. After concluding D, the VoIP server stores it and will use it when packetizing frames to be forwarded to UT1. Then the VoIP server sends the number C to UT1 in message 5-9. UT1 will then use (point 5-10) the number C when packetizing the voice to be sent to UT2 via the VoIP server.. Message 5-9 may be an acknowledgement message, a separate message for sending the number, or combined to a next message sent by UT2 to UT1.

After the numbers B and D are concluded, the VoIP server uses them, as stated above, when repacketizing IP packets transmitting VoIP. In other words, assuming that C is less than B but two times C more than B, when UT1 first sends C frames in an IP packet to UT2, the VoIP server unpacketizes the IP packet, waits for a further packet from UT1, then packetizes received B frames into an IP packet and sends it to UT2, and the frames in a further packet that did not fit into the IP packet sent to UT2 are packetized into a next packet. Correspondingly, assuming that A is less than D, when UT2 sends A frames in an IP packet to UT1, the VoIP server unpacketizes the IP packet, and if there are no previous frames waiting, the VoIP server waits for another IP packet from UT2 to UT1, unpacketizes it, packetizes D frames into an IP packet, sends it to UT1, waits for another IP packet from UT2, and unpacketizes the other IP packet, packetizes D frames, including those in the previous packet not yet forwarded, into an IP packet. When UT2 stops sending of packets, i.e. the user stops speaking, frames not yet forwarded, are naturally packetized and forwarded, although there are not D frames to be packetized into an IP packet.

In an embodiment, the VoIP server is configured to check, after concluding the numbers, whether or not the numbers C and B are the same, and if so, not to perform the repacketization described above; and correspondingly compare the numbers A and D, and if they are the same, not to perform the repacketization described above. Instead of checking if the numbers are the same, the VoIP server may be configured to check whether or not the numbers are close enough, i.e. whether the difference between the numbers is within a preset limit, and if so, not to perform the repacketization described above.

In an embodiment, the VoIP server is configured to conclude numbers B and D, and, instead of sending numbers A and C, to send the corresponding latencies to UT1 and UT2, which are configured to use the received latency to conclude the number to be used.

In another embodiment, the user terminals comprise a fixed number which they use in VoIP packetization. In the embodiment, the VoIP server determines only latencies L2 and L4 and concludes only numbers B and D, uses B when forwarding VoIP to UT2 and D when forwarding VoIP to UT1. Preferably, no number or latency information is sent to UT1 and UT2.

In a further embodiment, the VoIP server is configured to calculate L1 and L3, and depending on an implementation, either conclude A and C and send them or instead send the calculated latencies, and if the user terminal does not support updating the number, it will ignore the number (or the latency).

In another embodiment, the VoIP server is configured to receive capability information on UT1 and UT2, and to use that information for determining whether or not to conclude A or C (including calculating the corresponding latency), and whether or not to send information for updating the number in the user terminal.

In a further embodiment, the user terminals may send latency information to the VoIP server, which then uses that information when concluding A, B, C and/or D.

In an embodiment, the VoIP server is configured to conclude numbers B and D, and the user terminals may be configured to copy the packetization of the VoIP server. Advantages of this embodiment are that no separate messages are needed to convey the information, and there is no need to modify existing messages.

Depending on an implementation, the VoIP server may perform the calculation and conclusion for each leg of one IP call once, or it may perform it continuously, for example in response to receiving a control message, or in response to every second, third, fourth, fifth, etc. control message. For continuously updating the number (or latency), the VoIP server may be configured to store the time the report was received each time it receives an RTCP report.

Referring to Figure 5, it should be appreciated that there may be more than one VoIP server between UT1 and UT2. In such a case, the servers may exchange information on the latency and the packetization relating to their users, one of the servers may determine the packetization for a connection, and/or both the latency and the number may be determined for a transmission between two or more servers, for example.

In an embodiment illustrated in Figure 6, the user terminals are configured to determine the latency and to conclude the number. In the example illustrated in Figure 6, the user terminals are synchronized.

Referring to Figure 6, UT1 starts to send voice to UT2, and therefore an RTCP sender report 6-1 is sent from UT1 to UT2. In response to receiving the RTCP sender report 6-1 from a synchronized user terminal, UT2 is able to calculate an end-to-end latency L1' from UT1 to UT2. Therefore, UT2 calculates, in point 6-2, the latency L1', using for example an NTP timestamp in the RTCP sender report 6-1, and sends the latency L1' to UT1 in an RTCP receiver report 6-3. In response to receiving the report 6-3, the UT1 extracts, in point 6-4, the L1', and uses it to conclude, in point 6-4, the number of voice frames to be packetized in one packet, called A'. The conclusion may be performed as described above in Figure 3, for example. After A' has been concluded, UT1 will use it when packetizing voice to be sent to UT2. Further, UT1 is, in response to receiving the report 6-3, able to calculate an end-to-end latency L2' from UT2 to UT1. Therefore, UT1 calculates, in point 6-4, the latency L2' and sends it to UT2 in a subsequent RTCP sender report 6-5. In response to receiving the report 6-5, the UT2 extracts, in point 6-6, the L2', and uses it to conclude, in point 6-5, the number of voice frames to be packetized in one packet, called B'. The conclusion may be performed as described above in Figure 3, for example. After B' has been concluded, UT2 will use it when packetizing voice to be sent to UT1.

Depending on an implementation, user terminals according to the embodiment of Fig. 6 may be arranged to perform the process only at the beginning of the session or each time an RTCP report (either sender or receiver report) is received, or every second time, or every third time, etc. When the implementation is based on a repetitive process (i.e., the process is performed more than one time during a session), the user terminal may be configured to compare the received latency to a preceding latency, and to perform the conclusion phase only in response to the latencies being different, or if the difference between the two successive latencies exceeds a preset limit.

The steps/points, signaling messages and related functions described above in Figures 3 to 6 are in no absolute chronological order, and some of the steps/points may be performed simultaneously or in an order differing from the given one. Other functions can also be executed between the steps/points or within the steps/points and other signaling messages, as well as the actual VoIP transmission, or any real-time data transmission, may be sent between the illustrated messages. Some of the steps/points or part of the steps/points can also be left out or replaced with a corresponding step/point or part of the step/point. The VoIP functionality illustrates a procedure that may be implemented in one or more physical or logical entities. The signaling messages are only exemplary and may even comprise several separate messages for transmitting the same information. In addition, the messages may also contain other information.

It will be obvious to a person skilled in the art that, as the technology advances, the inventive concept can be implemented in various ways. The invention and its embodiments are not limited to the examples described above but may vary within the scope of the claims.

**Claims**

1. A method for transmitting real-time user data frames in packets comprising:

   controlling a real-time user data transmission by a control protocol;
   determining (301) a latency of the real-time user data transmission between two or more apparatuses;
   concluding (302) the number of real-time user data frames to be packetized into one packet using the determined latency as a criterion for the conclusion; and
   packetizing (305) the real-time user data frames to packets so that the concluded number of real-time user data frames is packetized into one packet;
   **characterized by** sending (4-2, 5-5, 5-9) the concluded number to at least one of the two or more apparatuses, and/or by determining the latency by an apparatus at least on the basis of the access network type of one of the two or more apparatuses, or on the basis of the access network types of the two or more apparatuses.

2. A method as claimed in claim 1, further comprising
   monitoring the latency during the real-time user data transmission;
   comparing (302) the latency with a preset target latency or a preset target latency range; and
   updating (304, 308) the number if the latency is not the target latency or within the target latency range.

3. A method as claimed in claim 1 or 2, wherein determining the latency and concluding the number are performed by the apparatus direction-specifically for downlink (5-4) and for uplink (5-8).

4. A method as claimed in any one of the preceding claims, further comprising:

   receiving, in the apparatus, one or more packets containing real-time user data frames;
   unpacketizing, by the apparatus, the packets; and
   repacketizing, by the apparatus, the real-time user data frames using the concluded number.

5. A method as claimed in claim 3, the method further comprising; comparing, by the apparatus, the number for downlink with the number for uplink; and
   if the difference between the numbers is within a preset limit, forwarding, by the apparatus, a received packet; otherwise
   unpacketizing, by the apparatus, received packets containing real-time user data; and
   repacketinzing, by the apparatus, the real-time user data frames using the concluded number.

6. A method as claimed in claim 1, 2 or 3, further comprising:

   detecting, by the apparatus, an update situation in which every other time the number is decreased and every other time increased, and
   selecting, in response to detection of the update situation, the number with which the latency is nearer to the target latency or the preset target latency range.

7. A computer program comprising program instructions adapted to perform a method as claimed in any one of claims 1 to 6 when the computer program is run.

8. An apparatus (200, 200', 400, 400') for providing real-time user data transmission in packets, the apparatus comprising means for concluding (21) the number of real-time user data frames to be packetized into one packet, for determining a latency between the apparatus and another apparatus on the transmission path of the real-time user data transmission, and for using at least the determined latency as a criterion for concluding the number **characterized in that** the apparatus further comprises means for sending (23) the concluded number to the other apparatus and/or the means for determining are configured to determine the latency at least on the basis of the access network type of the apparatus or of the other apparatus, or on the basis of the access network types of apparatuses participating to the real-time user data transmission.

9. An apparatus (200, 200', 400, 400') as claimed in claim 8, wherein the apparatus further comprises means for receiving (22) the latency information, and the means for concluding, determining and for using are configured to use the received latency information.

10. An apparatus (200, 200', 400, 400') as claimed in claim 9, wherein the means for concluding (21) are configured to detect a change in the latency during the transmission, and, in response to a detected change, to update the number.

11. An apparatus (200, 200', 400, 400') as claimed in claim 10, wherein the means for concluding (21) are further configured to check, prior to updating the number, whether the latency is a preset target latency or within a preset target latency range, and to update the number only if the latency is not the target latency or within the target latency range.

12. An apparatus (200, 200', 400, 400') as claimed in any one of claims 8 to 11, wherein the means for concluding (21) are further configured to conclude a number for uplink and a number for downlink.

13. An apparatus (200, 200', 400, 400') as claimed in any one of claims 8 to 12, the apparatus further comprising means for sending (23) the concluded number to the other apparatus.

14. An apparatus (200, 200', 400, 400') as claimed in any one of claims 8 to 13, the apparatus being an intermediate node in an end-to-end transmission path, the apparatus further comprising
   means for receiving (22) one or more packets containing real-time user data frames; and
   packetizing means (21) for unpacketizing the received packets and repacketizing the real-time user data frames using the concluded number.

15. An apparatus (200, 200', 400, 400') as claimed in claim 14, wherein the means for concluding (21) are configured to conclude a first number for a direction wherefrom the apparatus receives packets and a second number for a direction whereto the apparatus sends the packets; and
   the packetizing means (21) are further configured to compare the first number with the second number; and, only in response to the difference between the first and second number not being within a preset limit, to perform the unpacketizing and repacketinzing.

16. An apparatus (200, 200', 400, 400') for providing real-time user data transmission in packets, the apparatus being configured to receive information from other apparatuses over an access network, the apparatus comprising
   means for packetizing (21) real-time user data frames into packets,
   **characterized in that** the apparatus further comprises means for receiving (22) from another apparatus the number of real-time user data frames to be packetized into one packet, and the means for packetizing (21) are configured to use the received number.

17. An apparatus (200, 200', 400, 400') as claimed in any one of claims 8 to 16, wherein the apparatus is a user terminal (200, 200') or a network node or a server component (400, 400').

18. A telecommunication system (100) comprising one or more apparatuses (200, 200', 400, 400') as claimed in any of claims 8 to 16, and an Internet protocol network (500) via which user data frames are transmitted in packets.

19. A telecommunication system (100) as claimed in claim 18, wherein a first apparatus (200, 200', 400, 400') is configured to conclude a first number and to send the first number to a second apparatus, and the second apparatus (200, 200', 400, 400') is configured to conclude a second number, to compare the first number with the second number and on the basis of the comparison to select a number to be used for packetizing real-time user data frames into one packet.

20. A telecommunication system (100) as claimed in claim 19, wherein the second apparatus (200, 200', 400, 400') is further configured to send the selected number to the first apparatus, and the first apparatus (200, 200', 400, 400') is configured to receive the selected number and to use it for packetizing real-time user data frames into one packet.

**21.** A telecommunication system (100) as claimed in claim 18, 19 or 20, wherein the real-time user data is voice, and the apparatuses (200, 200', 400, 400') are configured to transmit voice over Internet protocol.

**Patentansprüche**

**1.** Verfahren zur Übertragung von Echtzeit-Benutzerdatenrahmen in Paketen, aufweisend:

Steuern einer Echtzeit-Benutzerdatenübertragung durch ein Steuerprotokoll;
Bestimmen (301) einer Latenz der Echtzeit-Benutzerdatenübertragung zwischen zwei oder mehreren Vorrichtungen;
Schließen (302) der Anzahl von in ein Paket zu paketierenden Echtzeit-Benutzerdatenrahmen unter Verwendung der bestimmten Latenz als Kriterium für das Schließen; und
Paketieren (305) der Echtzeit-Benutzerdatenrahmen in Pakete, so dass die geschlossene Anzahl von Echtzeit-Benutzerdatenrahmen in ein Paket paketiert wird;
**dadurch gekennzeichnet, dass** die geschlossene Anzahl an mindestens eine der zwei oder mehreren Vorrichtungen gesendet wird (4-2, 5-5, 5-9) und/oder die Latenz durch eine Vorrichtung mindestens aufgrund des Zugangsnetztyps einer der zwei oder mehreren Vorrichtungen oder aufgrund der Zugangsnetztypen der zwei oder mehreren Vorrichtungen bestimmt wird.

**2.** Verfahren nach Anspruch 1, aufweisend weiterhin:

Überwachen der Latenz während der Echtzeit-Benutzerdatenübertragung;
Vergleichen (302) der Latenz mit einer vorbestimmten Ziellatenz oder einem vorbestimmten Ziellatenzbereich; und
Aktualisieren (304, 308) der Anzahl, falls die Latenz nicht die Ziellatenz oder nicht innerhalb des Ziellatenzbereichs ist.

**3.** Verfahren nach Anspruch 1 oder 2, wobei das Bestimmen der Latenz und das Schließen der Anzahl richtungsspezifisch für Downlink (5-4) und für Uplink (5-8) durch die Vorrichtung ausgeführt werden.

**4.** Verfahren nach einem der vorhergehenden Ansprüche, aufweisend weiterhin:

Empfangen von einem oder mehreren Echtzeit-Benutzerdatenrahmen enthaltenden Paketen in der Vorrichtung;
Entpaketieren der Pakete anhand der Vorrichtung; und
Wiederpaketieren der Echtzeit-Benutzerdatenrahmen anhand der Vorrichtung unter Verwendung der geschlossenen Anzahl.

**5.** Verfahren nach Anspruch 3, aufweisend weiterhin:

Vergleichen der Anzahl für Downlink mit der Anzahl für Uplink anhand der Vorrichtung; und,
falls der Unterschied zwischen den Anzahlen innerhalb von vorbestimmten Grenzen ist, Weiterleiten eines empfangenen Pakets anhand der Vorrichtung; ansonsten
Entpaketieren von empfangenen, Echtzeit-Benutzerdaten enthaltenden Paketen anhand der Vorrichtung; und
Wiederpaketieren der Echtzeit-Benutzerdatenrahmen anhand der Vorrichtung unter Verwendung der geschlossenen Anzahl.

**6.** Verfahren nach Anspruch 1, 2 oder 3, aufweisend weiterhin:

Detektieren einer Aktualisierungssituation anhand der Vorrichtung, in der jedes zweite Mal die Anzahl verringert wird und jedes zweite Mal vergrößert wird, und,
als Antwort auf das Detektieren der Aktualisierungssituation, Auswählen der Anzahl, mit der die Latenz näher an der Ziellatenz oder dem vorbestimmten Ziellatenzbereich ist.

**7.** Computerprogramm mit Programmbefehlen, die adaptiert sind, ein Verfahren nach einem der Ansprüche 1 bis 6 auszuführen, wenn das Computerprogramm abläuft.

**8.** Vorrichtung (200, 200', 400, 400') zur Bereitstellung von Echtzeit-Benutzerdatenübertragung in Paketen, welche Vorrichtung Mittel zum Schließen (21) der Anzahl von in ein Paket zu paketierenden Echtzeit-Benutzerdatenrahmen, zum Bestimmen einer Latenz zwischen der Vorrichtung und einer anderen Vorrichtung auf dem Übertragungsweg der Echtzeit-Benutzerdatenübertragung und zum Verwenden mindestens der bestimmten Latenz als Kriterium für das Schließen der Anzahl aufweist, **dadurch gekennzeichnet, dass** die Vorrichtung weiterhin Mittel zum Senden (23) der geschlossenen Anzahl an die andere Vorrichtung aufweist und/oder die Mittel zum Bestimmen konfiguriert sind, die Latenz mindestens aufgrund des Zugangsnetztyps der Vorrichtung oder der anderen Vorrichtung oder aufgrund der Zugangsnetztypen von an der Echtzeit-Benutzerdatenübertragung teilnehmenden Vorrichtungen zu bestimmen.

9.  Vorrichtung (200, 200', 400, 400') nach Anspruch 8, worin die Vorrichtung weiterhin Mittel zum Empfangen (22) der Latenzinformationen aufweist und die Mittel zum Schließen, Bestimmen und Verwenden konfiguriert sind, die empfangenen Latenzinformationen zu verwenden.

10.  Vorrichtung (200, 200', 400, 400') nach Anspruch 9, worin die Mittel zum Schließen (21) konfiguriert sind, eine Änderung in der Latenz während der Übertragung zu detektieren, und als Antwort auf eine detektierte Änderung die Anzahl zu aktualisieren.

11.  Vorrichtung (200, 200', 400, 400') nach Anspruch 10, worin die Mittel zum Schließen (21) weiterhin konfiguriert sind, vor dem Aktualisieren der Anzahl zu prüfen, ob die Latenz eine vorbestimmte Ziellatenz oder innerhalb eines vorbestimmten Ziellatenzbereichs ist, und die Anzahl zu aktualisieren, nur wenn die Latenz nicht die Ziellatenz oder nicht innerhalb des Ziellatenzbereichs ist.

12.  Vorrichtung (200, 200', 400, 400') nach einem der Ansprüche 8 bis 11, worin die Mittel zum Schließen (21) weiterhin konfiguriert sind, eine Anzahl für Uplink und eine Anzahl für Downlink zu schließen.

13.  Vorrichtung (200, 200', 400, 400') nach einem der Ansprüche 8 bis 12, wobei die Vorrichtung weiterhin Mittel zum Senden (23) der geschlossenen Anzahl an die andere Vorrichtung aufweist.

14.  Vorrichtung (200, 200', 400, 400') nach einem der Ansprüche 8 bis 13, wobei die Vorrichtung ein Zwischenknoten auf einem Ende-zu-Ende-Übertragungsweg ist, welche Vorrichtung weiterhin aufweist:

     Mittel zum Empfangen (22) von einem oder mehreren Echtzeit-Benutzerdatenrahmen enthaltenden Paketen; und
     Paketierungsmittel (21) zum Entpaketieren der empfangenen Pakete und Wiederpaketieren der Echtzeit-Benutzerdatenrahmen unter Verwendung der geschlossenen Anzahl.

15.  Vorrichtung (200, 200', 400, 400') nach Anspruch 14, worin die Mittel zum Schließen (21) konfiguriert sind, eine erste Anzahl für eine Richtung, woraus die Vorrichtung Pakete empfängt, und eine zweite Anzahl für eine Richtung, in die die Vorrichtung die Pakete sendet, zu schließen; und
     die Paketierungsmittel (21) weiterhin konfiguriert sind, die erste Anzahl mit der zweiten Anzahl zu vergleichen; und, nur als Antwort darauf, dass der Unterschied zwischen der ersten und der zweiten Anzahl nicht innerhalb von vorbestimmten Grenzen ist, das Entpaketieren und Wiederpaketieren auszuführen.

16.  Vorrichtung (200, 200', 400, 400') zur Bereitstellung von Echtzeit-Benutzerdatenübertragung in Paketen, wobei die Vorrichtung konfiguriert ist, Informationen von anderen Vorrichtungen über ein Zugangsnetz zu empfangen, welche Vorrichtung aufweist:

     Mittel zum Paketieren (21) von Echtzeit-Benutzerdatenrahmen in Pakete,
     **dadurch gekennzeichnet, dass** die Vorrichtung weiterhin Mittel zum Empfang (22) der Anzahl von in ein Paket zu paketierenden Echtzeit-Benutzerdatenrahmen von einer anderen Vorrichtung aufweist und die Mittel zum Paketieren (21) konfiguriert sind, die empfangene Anzahl zu verwenden.

17.  Vorrichtung (200, 200', 400, 400') nach einem der Ansprüche 8 bis 16, worin die Vorrichtung eine Benutzerstation (200, 200') oder ein Netzknoten oder eine Serverkomponente (400, 400') ist.

18.  Telekommunikationssystem (100) mit einer oder mehreren Vorrichtungen (200, 200', 400, 400') nach einem der Ansprüche 8 bis 16 und Internet-Protokollnetz (500), über das Benutzerdatenrahmen in Paketen übertragen werden.

**19.** Telekommunikationssystem (100) nach Anspruch 18, worin eine erste Vorrichtung (200, 200', 400, 400') konfiguriert ist, eine erste Anzahl zu schließen und die erste Anzahl an eine zweite Vorrichtung zu senden, und die zweite Vorrichtung (200, 200', 400, 400') konfiguriert ist, eine zweite Anzahl zu schließen, die erste Anzahl mit der zweiten Anzahl zu vergleichen und aufgrund des Vergleichs eine zum Paketieren von Echtzeit-Benutzerdatenrahmen in ein Paket zu verwendende Anzahl auszuwählen.

**20.** Telekommunikationssystem (100) nach Anspruch 19, worin die zweite Vorrichtung (200, 200', 400, 400') weiterhin konfiguriert ist, die ausgewählte Anzahl an die erste Vorrichtung zu senden, und die erste Vorrichtung (200, 200', 400, 400') konfiguriert ist, die ausgewählte Anzahl zu empfangen und sie zum Paketieren von Echtzeit-Benutzerdatenrahmen in ein Paket zu verwenden.

**21.** Telekommunikationssystem (100) nach Anspruch 18, 19 oder 20, worin die Echtzeit-Benutzerdaten Sprache sind und die Vorrichtungen (200, 200', 400, 400') konfiguriert sind, Sprache über das Internetprotokoll zu übertragen.

## Revendications

**1.** Procédé destiné à transmettre des trames de données d'utilisateur en temps réel dans des paquets comprenant les étapes consistant à :

contrôler une transmission de données d'utilisateur en temps réel à l'aide d'un protocole de contrôle ;
déterminer (301) un retard de la transmission de données d'utilisateur en temps réel entre deux appareils ou plus ;
déduire (302) le nombre de trames de données d'utilisateur en temps réel à mettre en paquet dans un paquet en utilisant le retard déterminé comme critère de la déduction; et
mettre en paquet (305) les trames de données d'utilisateur en temps réel dans des paquets de telle sorte que le nombre déduit de trames de données d'utilisateur en temps réel soient mis en paquet dans un paquet;
**caractérisé par** une étape consistant à envoyer (4-2, 5-5, 5-9) le nombre déduit à l'un au moins des deux appareils ou plus et/ou à faire déterminer le retard par un appareil au moins sur la base du type de réseau d'accès de l'un des deux appareils ou plus, ou sur la base des types de réseau d'accès des deux appareils ou plus.

**2.** Procédé selon la revendication 1, comprenant en outre les étapes consistant à :

surveiller le retard au cours de la transmission de données d'utilisateur en temps réel;
comparer (302) le retard à un retard cible préréglé ou à une plage de retard cible préréglée ; et
mettre à jour (304, 308) le nombre si le retard n'est pas égal au retard cible ou ne se situe pas à l'intérieur de la plage de retard cible.

**3.** Procédé selon la revendication 1 ou la revendication 2, dans lequel les étapes consistant à déterminer le retard et à déduire le nombre, sont exécutées par l'appareil d'une manière propre à la direction pour la liaison descendante (5 - 4) et pour la liaison montante (5 - 8).

**4.** Procédé selon l'une quelconque des revendications précédentes, comprenant en outre les étapes consistant à :

recevoir, dans l'appareil, un ou plusieurs paquets qui contiennent des trames de données d'utilisateur en temps réel;
faire défaire, par l'appareil, les paquets ; et
faire remettre en paquet, par l'appareil, les trames de données d'utilisateur en temps réel en utilisant le nombre déduit.

**5.** Procédé selon la revendication 3, le procédé comprenant en outre les étapes consistant à :

faire comparer, par l'appareil, le nombre pour la liaison descendante au nombre pour la liaison montante ; et si la différence entre les nombres se situe à l'intérieur d'une limite préréglée, faire suivre, par l'appareil, un paquet reçu; sinon :

faire défaire, par l'appareil, les paquets reçus qui contiennent des données d'utilisateur en temps réel ; et faire remettre en paquet, par l'appareil, les trames de données d'utilisateur en temps réel en utilisant le nombre déduit.

**6.** Procédé selon l'une quelconque des revendications 1, 2 ou 3, comprenant en outre les étapes consistant à :

faire détecter, par l'appareil, une situation de mise à jour chaque fois que le nombre est diminué et chaque fois que le nombre est augmenté ; et
sélectionner, en réponse à la détection de la situation de mise à jour, le nombre pour lequel le retard est le plus proche du retard cible ou de la plage de retard cible préréglée.

**7.** Programme informatique comprenant des instructions de programme adaptées de façon à exécuter un procédé selon l'une quelconque des revendications 1 à 6 lorsque le programme informatique est exécuté.

**8.** Appareil (200, 200', 400, 400') destiné à fournir une transmission de données d'utilisateur en temps réel dans des paquets, l'appareil comprenant des moyens destinés à déduire (21) le nombre de trames de données d'utilisateur en temps réel à mettre en paquet dans un paquet, à déterminer un retard entre un appareil et un autre appareil sur le chemin de transmission de la transmission de données d'utilisateur en temps réel, et à utiliser au moins le retard déterminé en tant que critère pour déduire le nombre, **caractérisé en ce que** l'appareil comprend en outre des moyens destinés à envoyer (23) le nombre déduit à l'autre appareil et/ou les moyens de détermination sont configurés de façon à déterminer le retard au moins sur la base du type de réseau d'accès de l'appareil ou de l'autre appareil, ou sur la base des types de réseau d'accès des appareils qui participent à la transmission de données d'utilisateur en temps réel.

**9.** Appareil (200, 200', 400, 400') selon la revendication 8, dans lequel l'appareil comprend en outre des moyens destinés à recevoir (22) les informations de retard, et les moyens de déduction, de détermination et d'utilisation sont configurés de façon à utiliser les informations de retard reçues.

**10.** Appareil (200, 200', 400, 400') selon la revendication 9, dans lequel les moyens de déduction (21) sont configurés de façon à détecter un changement du retard au cours de la transmission, et, en réponse à la détection d'un changement, à mettre à jour le nombre.

**11.** Appareil (200, 200', 400, 400') selon la revendication 10, dans lequel les moyens de déduction (21) sont configurés en outre de façon à vérifier, avant de mettre à jour le nombre, si le retard est égal à un retard cible préréglé ou se situe dans une plage de retard cible préréglée, et à mettre à jour le nombre seulement si le retard n'est pas égal au retard cible ou ne se situe pas dans la plage de retard cible.

**12.** Appareil (200, 200', 400, 400') selon l'une quelconque des revendications 8 à 11, dans lequel les moyens de déduction (21) sont configurés en outre de façon à déduire un nombre pour une liaison montante et un nombre pour une liaison descendante.

**13.** Appareil (200, 200', 400, 400') selon l'une quelconque des revendications 8 à 12, l'appareil comprenant en outre des moyens destinés à envoyer (23) le nombre déduit à l'autre appareil.

**14.** Appareil (200, 200', 400, 400') selon l'une quelconque des revendications 8 à 13, l'appareil étant un noeud intermédiaire dans un chemin de transmission de bout en bout, l'appareil comprenant en outre :

des moyens destinés à recevoir (22) un ou plusieurs paquets qui contiennent des trames de données d'utilisateur en temps réel ; et
des moyens de mise en paquet (21) destinés à défaire les paquets reçus et à remettre en paquet les trames de données d'utilisateur en temps réel en utilisant le nombre déduit.

**15.** Appareil (200, 200', 400, 400') selon la revendication 14, dans lequel les moyens de déduction (21) sont configurés de façon à déduire un premier nombre pour une direction en provenance de laquelle l'appareil reçoit des paquets et un deuxième nombre pour une direction vers laquelle l'appareil envoie les paquets; et
les moyens de mise en paquet (21) sont configurés en outre de façon à comparer le premier nombre au deuxième nombre; et, seulement en réponse à une différence entre les premier et deuxième nombres qui ne se situe pas à l'intérieur d'une limite préréglée, à exécuter les étapes consistant à défaire les paquets et à refaire les paquets.

**16.** Appareil (200, 200', 400, 400') destiné à fournir une transmission de données d'utilisateur en temps réel dans des paquets, l'appareil étant configuré de façon à recevoir des informations en provenance d'autres appareils sur un réseau d'accès, l'appareil comprenant :

des moyens de mise en paquet (21) des trames de données d'utilisateur en temps réel dans des paquets ; **caractérisé en ce que** l'appareil comprend en outre des moyens destinés à recevoir (22) en provenance d'un autre appareil le nombre de trames de données d'utilisateur en temps réel à mettre en paquet dans un paquet, et les moyens de mise en paquet (21) sont configurés de façon à utiliser le nombre reçu.

17. Appareil (200, 200', 400, 400') selon l'une quelconque des revendications 8 à 16, dans lequel l'appareil est un terminal d'utilisateur (200, 200') ou un noeud de réseau ou un composant de serveur (400, 400').

18. Système de télécommunication (100) comprenant un ou plusieurs appareils (200, 200', 400, 400') selon l'une quelconque des revendications 8 à 16, et un réseau à protocole Internet (500) par l'intermédiaire duquel des trames de données d'utilisateur sont transmises dans des paquets.

19. Système de télécommunication (100) selon la revendication 18, dans lequel un premier appareil (200, 200', 400, 400') est configuré de façon à déduire un premier nombre et à envoyer le premier nombre à un deuxième appareil, et le deuxième appareil (200, 200', 400, 400') est configuré de façon à déduire un deuxième nombre, à comparer le premier nombre au deuxième nombre et sur la base de la comparaison, à sélectionner un nombre à utiliser pour mettre en paquet les trames de données d'utilisateur en temps réel dans un paquet.

20. Système de télécommunication (100) selon la revendication 19, dans lequel le deuxième appareil (200, 200', 400, 400') est configuré en outre de façon à envoyer le nombre sélectionné au premier appareil, et le premier appareil (200, 200', 400, 400') est configuré de façon à recevoir le nombre sélectionné et à l'utiliser de façon à mettre en paquet les trames de données d'utilisateur en temps réel dans un paquet.

21. Système de télécommunication (100) selon l'une quelconque des revendications 18, 19 ou 20, dans lequel les données d'utilisateur en temps réel sont de la voix, et les appareils (200, 200', 400, 400') sont configurés de façon à transmettre la voix sur un protocole Internet.

300 Access
400 VoIP Server
500 IP
400' VoIP Server
300' Access
200' VoIP Client
100
200 VoIP Client

*FIG.1*

24 mem
21 VoIP application
22 Rx
23 Tx
200

*FIG.2*

Apparatus 1
Apparatus 2

conclude ~ 4-1
conclude ~ 4-1'

4-2

compare ~ 4-3

select ~ 4-4

4-5

use ~ 4-6

*FIG.4*

15

determine latency 301

302 latency < target? no 306 latency > target? no

yes

303 number < max? 307 number > 1?

no no

yes 304 yes 308

increase number of frames in one packet decrease number of frames in one packet

packetize 305

*FIG.3*

UT 1 UT 2

6-1

calculate L1' 6-2

6-3

conclude A' using L1'; calculate L2'; use A' 6-4

*FIG.6*

6-5

conclude B' using L2'; use B' 6-6

**UT1**  **VoIP Server**  **UT2**

5-1 →

5-1 →

store time1 ～ 5-2

5-3 ←

5-3 ←

store time2
calculate L1, L2
conclude A, B
store B
use B towards UT2
～ 5-4

5-5 →

5-7

use A ～ 5-6

5-7 →

calculate L3, L4
conclude C, D
store D
use D towards UT1
～ 5-8

5-9 ←

use C ～ 5-10

*FIG.5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6886040 B

- US 2005122960 A